# EUROPÄISCHE PATENTSCHRIFT

(11) **EP 2 548 773 B1**
(45) Veröffentlichungstag und Bekanntmachung des Hinweises auf die Patenterteilung: **19.06.2019**
(21) Anmeldenummer: 12175322.2
(22) Anmeldetag: 06.07.2012
(51) Int. Cl.: B60S 1/38

(54) **Wischvorrichtung und Verfahren zur Montage einer Wischvorrichtung**
Wiping device and method of assembling a wiping device
Dispositif d'essuyage et procédé d'assemblage d'un dispositif d'essuyage

(30) Priorität: 21.07.2011 DE 102011079535
(43) Veröffentlichungstag der Anmeldung: 23.01.2013
(73) Patentinhaber: ROBERT BOSCH GMBH, 70442 Stuttgart (DE)
(72) Erfinder: Benner, Andreas, 104 Taipei (TW); Baumert, Stefan, 76139 Karlsruhe (DE); Pichler, Andreas, 76646 Bruchsal (DE); Obert, Mike, 76593 Gernsbach (DE)

(56) Entgegenhaltungen:
- WO-A1-2010/016000
- CN-Y- 201 313 541
- US-A1- 2007 094 833
- US-A1- 2010 218 328

## Beschreibung

### Stand der Technik

Es sind bereits Wischvorrichtungen mit einem Adapter, der eine Anlenkstelle zu einem Wischarm bildet und zumindest ein Formschlusselement aufweist, das zur formschlüssigen Verbindung mit zumindest einem Formschlusselement eines weiteren Adapters vorgesehen ist, bekannt.

Dokument US 2007/094833 A1 offenbart eine Wischvorrichtung nach dem Oberbegriff des Anspruchs 1.

### Offenbarung der Erfindung

Die Erfindung geht aus von einer Wischvorrichtung mit einem Adapter, der eine Anlenkstelle zu einem Wischarm oder einem Wischblatt bildet und zumindest ein Formschlusselement aufweist, das zur formschlüssigen Verbindung mit zumindest einem Formschlusselement eines weiteren Adapters vorgesehen ist.

Es wird vorgeschlagen, dass die Wischvorrichtung zumindest ein Sperrelement aufweist, das zur Herstellung der formschlüssigen Verbindung zwischen dem zumindest einen Formschlusselement des Adapters und dem zumindest einen Formschlusselement des weiteren Adapters dazu vorgesehen ist, das zumindest eine Formschlusselement des Adapters auszulenken. Dadurch kann für einen Benutzer ein schneller und intuitiver Montagevorgang erreicht werden. Unter einem "Adapter" soll dabei insbesondere ein Wischarmadapter oder ein Wischblattadapter verstanden werden. Unter einem "Wischarmadapter" soll in diesem Zusammenhang insbesondere ein Adapter verstanden werden, der einen Kontaktbereich zu einem Wischarmbauteil aufweist und dazu vorgesehen ist, einen Kopplungsbereich des Wischarmbauteils für eine Kopplung und/oder Kontaktierung mit einem Wischblattadapter bereitzustellen. Bevorzugt ist das Wischarmbauteil an einem Wischarm befestigbar. Unter einem "Wischblattadapter" soll in diesem Zusammenhang insbesondere ein Adapter verstanden werden, der einen Kontaktbereich zu einem Wischblattbauteil aufweist und mit dem Wischblattbauteil, in einem demontierten Zustand eines Wischblatts von einem Wischarm, zumindest in einem Betriebszustand unverlierbar verbunden und dazu vorgesehen ist, einen Kopplungsbereich des Wischblattbauteils für eine Kopplung und/oder Kontaktierung mit einem Wischarmadapter bereitzustellen. Unter "vorgesehen" soll insbesondere speziell ausgelegt und/oder ausgestattet verstanden werden.

Weiter wird vorgeschlagen, dass der Adapter als ein Wischarmadapter ausgebildet ist. Dadurch kann die formschlüssige Verbindung zwischen dem als Wischarmadapter ausgebildeten Adapter und dem weiteren Adapter besonders vorteilhaft ausgestaltet werden.

Des Weiteren wird vorgeschlagen, dass das Sperrelement dazu vorgesehen ist, das zumindest eine Formschlusselement des Adapters aus seinem Ursprungszustand auszulenken. Dadurch kann der Adapter besonders vorteilhaft montiert und demontiert werden. Unter einem "Ursprungszustand" soll insbesondere ein Zustand des zumindest einen Formschlusselements verstanden werden, in den es sich ohne eine von außen auf das Formschlusselement wirkende Kraft begibt.

Weiterhin wird vorgeschlagen, dass das Sperrelement als ein separates Bauteil ausgebildet ist. Dadurch kann das Sperrelement besonders einfach ausgebildet werden. Unter "als separates Bauteil ausgebildet" soll insbesondere verstanden werden, dass das Sperrelement als ein eigenes abgeschlossenes Bauteil ausgebildet ist, so dass dieses insbesondere zumindest lösbar von dem Wischblattadapter oder dem Wischarmadapter ausgebildet ist und sich insbesondere von einer Ausgestaltung unterscheidet, in der das Sperrelement einstückig mit dem Wischblattadapter oder dem Wischarmadapter ausgebildet ist. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Zudem wird vorgeschlagen, dass das Sperrelement für eine werkzeugfreie Montage vorgesehen ist. Dadurch kann das Sperrelement von dem Benutzer vorteilhaft einfach montiert werden. Unter einer "werkzeugfreien Montage" soll insbesondere eine händische Montage verstanden werden, die ein Benutzer insbesondere ohne die Zuhilfenahme eines Werkzeugs durchführen kann.

Ferner wird vorgeschlagen, dass der Adapter zumindest ein weiteres Formschlusselement aufweist, das dazu vorgesehen ist, zumindest einen wesentlichen Teil einer Wischkraft zu übertragen. Dadurch kann eine Kraftübertragung zwischen den beiden Adaptern besonders vorteilhaft aufgeteilt werden. Unter einer "Wischkraft" soll insbesondere eine Kraft verstanden werden, die von einem Antriebsmotor erzeugt wird und über den Wischarm auf das Wischblatt übertragen wird. Unter "zumindest einem wesentlichen Teil der Wischkraft" soll in diesem Zusammenhang insbesondere verstanden werden, dass das weitere Formschlusselement zumindest 40 %, vorzugsweise zumindest 70 % und besonders bevorzugt zumindest 90 % der Wischkraft überträgt, wobei der Teil, den ein einzelnes weiteres Formschlusselement überträgt, von einer Anzahl der weiteren Formschlusselemente abhängig ist.

Des Weiteren wird vorgeschlagen, dass das zumindest eine weitere Formschlusselement des Adapters als ein Zapfen ausgebildet ist. Dadurch kann eine besonders einfache Kraftübertragung zwischen den Adaptern stattfinden. Unter einem "Zapfen" soll insbesondere eine Erhebung verstanden werden, deren größte Quererstreckung maximal so groß ist wie ihre Ausdehnung entlang ihrer Haupterstreckungsrichtung.

Weiter wird vorgeschlagen, dass das Formschlusselement des Wischarmadapters eine ovale Grundform aufweist. Dadurch kann eine Kraft zwischen den Adaptern besonders vorteilhaft übertragen werden. Unter einer "Grundform" soll insbesondere eine Form des Formschlusselements, in Haupterstreckungsrichtung des Formschlusselements betrachtet, verstanden werden.

Es zeigen:
- Fig. 1: eine Explosionsdarstellung einer erfindungsgemäßen Wischvorrich-tung,
- Fig. 2: eine perspektivische Ansicht der Wischvorrichtung nach Figur 1 in ei-nem ersten Montageschritt,
- Fig. 3: eine perspektivische Ansicht der Wischvorrichtung nach Figur 1 in ei-nem weiteren Montageschritt und
- Fig. 4: eine perspektivische Ansicht der Wischvorrichtung nach Figur 1 in ei-nem montierten Zustand.

### Beschreibung des Ausführungsbeispiels

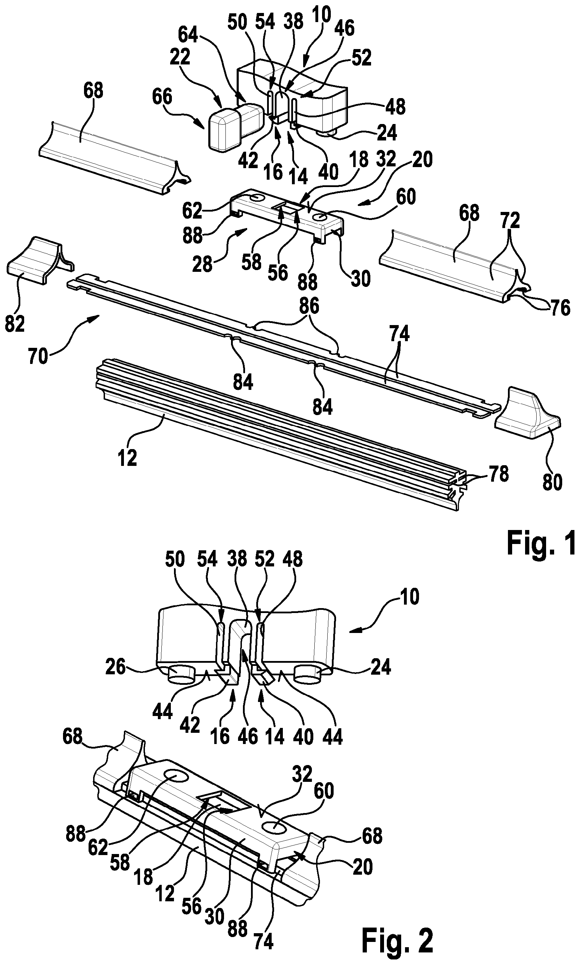

Figur 1 zeigt eine Explosionsdarstellung eines erfindungsgemäßen Systems mit einer Wischvorrichtung eines Kraftfahrzeugs. Die Wischvorrichtung weist einen Adapter 10 auf, der eine nicht näher dargestellte Anlenkstelle zu einem Wischarm aufweist. Der Adapter 10, der die Anlenkstelle zu dem Wischarm aufweist, ist als ein Wischarmadapter ausgebildet. Je nach Ausführungsform des Wischarms muss der als Wischarmadapter ausgebildete Adapter 10 ausgetauscht werden. Ausführungsformen der besagten Anlenkstelle des Adapters 10 sind dem Fachmann allgemein bekannt und aus Gründen der Übersichtlichkeit nicht dargestellt.

Weiter umfasst das System einen weiteren Adapter 20 und ein Wischblatt 12. Der weitere Adapter 20 weist eine Anlenkstelle 28 für das Wischblatt 12 auf. Der weitere Adapter 20, der die Anlenkstelle 28 für das Wischblatt 12 aufweist, ist als ein Wischblattadapter ausgebildet. Der als Wischarmadapter ausgebildete Adapter 10 ist von dem als Wischblattadapter ausgebildeten weiteren Adapter 20 lösbar und somit austauschbar ausgebildet.

Der als Wischblattadapter ausgebildete weitere Adapter 20 weist einen Grundkörper 30 auf. Ferner ist der Grundkörper 30 von einem Kunststoff-Spritzgussteil gebildet. Es ist in diesem Zusammenhang auch denkbar, den Grundkörper 30 aus einem Metallteil, wie insbesondere aus einem Metallblech, oder einem anderen, dem Fachmann als sinnvoll erscheinenden Material zu bilden. Der Grundkörper 30 umfasst eine ebene Auflagefläche 32. Die Auflagefläche 32 dient bei einem Montagevorgang als Anlage für den als Wischarmadapter ausgebildeten Adapter 10. Der Adapter 10 wird bei einem Montagevorgang auf die Auflagefläche 32 aufgesetzt.

Eine Vertikalachse 34 ist senkrecht zur Auflagefläche 32 des als Wischblattadapter ausgebildeten Adapters 20 angeordnet. Zudem ist die Vertikalachse 34 parallel zu einer Hauptanpresskraft 36 des als Wischarmadapter ausgebildeten Adapters 10 angeordnet. Die Hauptanpresskraft 36 wird durch ein auf den Wischarm wirkendes Drehmoment erzeugt und drückt den als Wischblattadapter ausgebildeten weiteren Adapter 20 und ein mit dem weiteren Adapter 20 verbundenes gelenkfreies Wischblatt 12 in Richtung einer nicht näher dargestellten zu wischenden Kraftfahrzeugscheibe. Eine Horizontalachse ist parallel zu einer Haupterstreckungsrichtung des Wischblatts 12 angeordnet.

Zur formschlüssigen Verbindung des Adapters 10 und des weiteren Adapters 20 bildet der als Wischarmadapter ausgebildete Adapter 10 zwei Formschlusselemente 14, 16 aus. Zur Ausbildung der Formschlusselemente 14, 16 weist der Adapter 10 eine Ausnehmung 38 auf. Die Ausnehmung 38 ist an einer, in einem montierten Zustand dem weiteren Adapter 20 zugewandten Seite des Adapters 10 angeordnet. Dabei ist die Ausnehmung 38 entlang der Horizontalachse mittig in den Adapter 10 eingebracht. Die Formschlusselemente 14, 16 sind als Haken ausgebildet und weisen ihre Haupterstreckungsrichtung entlang der Vertikalachse 34 auf. Die als Haken ausgebildeten Formschlusselemente 14, 16 sind in der Ausnehmung 38 angeordnet. Die Formschlusselemente 14, 16 sind dabei beabstandet zueinander angeordnet und weisen jeweils einen gleichen Abstand zu einer Mittelebene der Ausnehmung 38 auf. Eine Hakenform 40, 42 der Formschlusselemente 14, 16 ist entlang der Haupterstreckungsrichtung jeweils von dem anderen Formschlusselement 14, 16 weg gerichtet. Die Formschlusselemente 14, 16 stehen dabei mit ihrer Hakenform 40, 42 jeweils über eine untere Anlagefläche 44 des Adapters 10 hinaus. Dabei unterteilen die Formschlusselemente 14, 16 die Ausnehmung 38 in drei Bereiche. Ein mittlerer Bereich zwischen den beiden Formschlusselementen 14, 16 ist als eine Sperrelementaufnahme 46 ausgebildet. Die Bereiche zwischen einem der Formschlusselemente 14, 16 und einer benachbarten Wandung 48, 50 der Ausnehmung 38 sind jeweils als eine Auslenkzone 52, 54 ausgebildet. In einem Ursprungszustand sind die Formschlusselemente 14, 16 leicht nach innen, also einander entgegen gebogen. Durch die Auslenkzonen 52, 54 können die als Haken ausgebildeten Formschlusselemente 14, 16 nach außen gebogen werden.

Zur Entlastung der Formschlusselemente 14, 16 in einem montierten Zustand weist der Adapter 10 zwei weitere Formschlusselemente 24, 26 auf. Die weiteren Formschlusselemente 24, 26 sind dazu vorgesehen, einen wesentlichen Teil einer Wischkraft zu übertragen. Dazu sind die weiteren Formschlusselemente 24, 26 als Zapfen ausgebildet. Die Formschlusselemente 24, 26 weisen eine ovale Grundform auf, wodurch eine Wischkraft des Wischarms besonders gut von den Adaptern 10, 20 übertragen werden kann. Die als Zapfen ausgebildeten Formschlusselemente 24, 26 sind auf der unteren Anlagefläche 44 des Adapters 10 angeordnet. Jeweils eines der Formschlusselemente 24, 26 ist entlang der Horizontalachse in einem äußeren Bereich des Adapters 10 angeordnet. Die Formschlusselemente 24, 26 weisen dabei jeweils einen gleichen Abstand von einer Mittelebene des Adapters 10 auf. Ein Formschluss, der über die Formschlusselemente 24, 26 hergestellt werden kann, ist entlang der Vertikalachse 34 in einer Richtung offen. In dieser Richtung erfolgt auch ein Trennen der Adapter 10, 20 voneinander. Durch die Formschlusselemente 14, 16 werden die Adapter 10, 20 verliersicher miteinander verbunden und somit auch die zur wesentlichen Übertragung der Wischkraft vorgesehenen Formschlusselemente 24, 26 in ihrem Formschluss gehalten und fixiert.

Zur Anbindung an den Adapter 10 weist der weitere Adapter 20 ebenfalls ein Formschlusselement 18 auf. Das Formschlusselement 18 ist zur formschlüssigen Verbindung mit den Formschlusselementen 14, 16 des als Wischarmadapter ausgebildeten Adapters 10 vorgesehen. Das Formschlusselement 18 des weiteren Adapters 20 ist korrespondierend zu den beiden Formschlusselementen 14, 16 des Adapters 10 ausgebildet. Das Formschlusselement 18 ist als eine Ausnehmung mit jeweils einem Hinterschnitt 56, 58 an den orthogonal zu der Horizontalachse ausgerichteten Enden ausgebildet. Die Hinterschnitte 56, 58 sind dazu vorgesehen, in einem montierten Zustand mit den Hakenformen 40, 42 der als Haken ausgebildeten Formschlusselemente 14, 16 des Adapters 10 formschlüssig verbunden zu werden. Eine Breite des als Ausnehmung ausgebildeten Formschlusselements 18 ist entlang der Horizontalachse genau so groß, dass beide Formschlusselemente 14, 16 des Adapters 10, ohne aus ihrem Ursprungszustand ausgelenkt zu werden, in das als Ausnehmung ausgebildete Formschlusselement 18 eingeführt werden können. Grundsätzlich ist es dabei auch denkbar, dass das als Ausnehmung ausgebildete Formschlusselement 18 so ausgebildet ist, dass die Formschlusselemente 14, 16 des Adapters 10 bei einer Montage leicht ausgebogen werden.

Zur Aufnahme der beiden weiteren Formschlusselemente 24, 26 des Adapters 10 weist der weitere Adapter 20 ebenfalls zwei weitere Formschlusselemente 60, 62 auf. Die Formschlusselemente 60, 62 sind korrespondierend zu den weiteren Formschlusselementen 24, 26 des als Wischarmadapter ausgebildeten Adapters 10 ausgebildet. Die Formschlusselemente 60, 62 sind als Ausnehmungen ausgebildet, die eine ovale Grundform aufweisen. Die als Ausnehmungen ausgebildeten Formschlusselemente 60, 62 sind in die Auflagefläche 32 des Grundkörpers 30 eingebracht. In einem montierten Zustand sind die als Zapfen ausgebildeten Formschlusselemente 24, 26 des als Wischarmadapter ausgebildeten Adapters 10 in den als Aufnahmen ausgebildeten Formschlusselementen 60, 62 des als Wischblattadapter ausgebildeten Adapters 20 angeordnet.

Zur Herstellung der formschlüssigen Verbindung zwischen den Formschlusselementen 14, 16 des Adapters 10 und dem Formschlusselement 18 des weiteren Adapters 20 weist die Wischvorrichtung ein Sperrelement 22 auf. Das Sperrelement 22 weist einen Sperrbereich 64 und einen Griff 66 auf. Das Sperrelement 22 ist für eine werkzeugfreie Montage vorgesehen. Über den Griff 66 kann das Sperrelement 22 von einem Bediener werkzeugfrei per Hand montiert werden. Das Sperrelement 22 ist dazu vorgesehen, die Formschlusselemente 14, 16 des als Wischarmadapter ausgebildeten Adapters 10 auszulenken. Dazu wird das Sperrelement 22 während einer Montage mit dem Sperrbereich 64 in die Sperrelementaufnahme 46 des als Wischarmadapter ausgebildeten Adapters 10 geschoben. Der Sperrbereich 64 des Sperrelements 22 weist an seinem dem Griff 66 abgewandten Ende eine sich verjüngende Kontur auf, wodurch das Sperrelement 22 bei einer Montage einfacher in die Sperrelementaufnahme 46 geschoben werden kann. Durch das Einführen des Sperrelements 22 in die Sperrelementaufnahme 46 werden die Formschlusselemente 14, 16 des Adapters 10 gespreizt und aus ihrem Ursprungszustand ausgelenkt. Das Sperrelement 22 übt mit seinem Sperrbereich 64 eine Sperrkraft auf die Formschlusselemente 14, 16 aus, die in Richtung des jeweiligen Hinterschnitts 56, 58 des Formschlusselements 18 gerichtet ist. Die Hakenformen 40, 42 der Formschlusselemente 14, 16 werden hinter die Hinterschnitte 56, 58 des Formschlusselements 18 gedrückt, wodurch ein Formschluss entsteht. Durch die formschlüssige Verbindung der Formschlusselemente 14, 16 des Adapters 10 und des Formschlusselements 18 des weiteren Adapters 20 sind die Adapter 10, 20 verliersicher miteinander verbunden. Das Sperrelement 22 weist zur Verliersicherung ein nicht näher dargestelltes Rastelement auf, mittels dessen das Sperrelement 22 dauerhaft in der Sperrelementaufnahme 46 angebracht werden kann. Grundsätzlich ist es auch denkbar, dass das Sperrelement 22 lediglich durch eine Federkraft, die die Formschlusselemente 14, 16 des Adapters 10 auf das Sperrelement 22 ausüben, verliersicher in der Sperrelementaufnahme 46 angeordnet ist.

Grundsätzlich ist es aber auch denkbar, dass das Sperrelement 22 mittels eines Werkzeugs in die Sperrelementaufnahme 46 geschoben werden kann. Dazu könnte das Sperrelement 22 beispielsweise eine Aufnahme aufweisen, über die das Sperrelement 22 mittels eines normalen Schlüssels oder eines anderen, dem Fachmann als sinnvoll erscheinenden Werkzeugs, wie beispielsweise mittels eines Schraubenschlüssels, aufgenommen und dann mittels des Werkzeugs in die Sperrelementaufnahme 46 geschoben werden kann.

An der Wischvorrichtung sind ein Windabweiserelement 68, ein Trägerelement 70 und das Wischblatt 12 angeordnet. Das Windabweiserelement 68 weist zwei symmetrisch ausgebildete, konkave Windabweiserflächen 72 auf, die in einem Betriebszustand auftretenden Fahrtwind abweisen und dabei die Hauptanpresskraft 36 erhöhen. Zudem ist das Windabweiserelement 68 zweigeteilt, also von zwei getrennten Bauteilen gebildet. Das Trägerelement 70 umfasst zwei Federschienen 74. Es ist in diesem Zusammenhang jedoch auch denkbar, eine einteilige Federschiene als Trägerelement einzusetzen. Das Trägerelement 70 wird bei einer Montage in eine Längsführungsschiene 76 des Windabweiserelements 68 eingeschoben. Das Wischblatt 12 wird dabei von den Federschienen 74 beidseitig gehalten. Dazu weist das Wischblatt 12 auf jeder Seite eine Aufnahmenut 78 für das Trägerelement 70 auf. Zwei Abschlusskappen 80, 82 schließen das Trägerelement 70 jeweils an einem Ende in eine Längsrichtung des Wischblatts 12 ab und vermeiden ein Lösen der Federschienen 74 aus der Aufnahmenut 78. Das Wischblatt 12 ist somit in einem montierten Zustand über das Trägerelement 70 mit dem Windabweiserelement 68 verbunden.

Das Trägerelement 70 weist vier Befestigungsnasen 84, 86 auf. Jeweils zwei Befestigungsnasen 84 weisen in eine Richtung, die entgegengesetzt zu einer Richtung der anderen beiden Befestigungsnasen 86 verläuft. Der Grundkörper 30 des als Wischblattadapter ausgebildeten weiteren Adapters 20 weist vier Befestigungsausnehmungen 88 auf, die mit den Befestigungsnasen 84, 86 in ihrer Form korrespondieren. Für eine Montage des als Wischblattadapter ausgebildeten weiteren Adapters 20 mit dem Trägerelement 70 werden die Befestigungsnasen 84, 86 in die Befestigungsausnehmungen 88 eingeführt. Es sind ferner viele weitere, dem Fachmann als sinnvoll erscheinende Befestigungsmethoden zur Befestigung des Trägerelements 70 mit dem als Wischblattadapter ausgebildeten weiteren Adapter 20 denkbar, wie insbesondere ein Einhängen eines Trägerelements in eine Führungsschiene des als Wischblattadapter ausgebildeten weiteren Adapters 20. Ferner ist ein Umschließen des Grundkörpers 30 von einem Trägerelement denkbar. Des Weiteren ist es auch denkbar, das Trägerelement 70 mit dem Grundkörper 30 zu verkleben, zu verschrauben und/oder zu vernieten. Ist der Grundkörper 30 des als Wischblattadapter ausgebildeten weiteren Adapters 20 von einem Metallteil gebildet, kann eine Verbindung eines Trägerelements auch durch eine Schweiß- oder Lötverbindung erfolgen.

Figur 2 zeigt eine perspektivische Darstellung der Wischvorrichtung vor einem Montagevorgang. Das Windabweiserelement 68, das Trägerelement 70 und das Wischblatt 12 sind mit dem als Wischblattadapter ausgebildeten Adapter 20 unverlierbar verbunden. Der als Wischarmadapter ausgebildete Adapter 10 ist noch nicht mit dem als Wischblattadapter ausgebildeten Adapter 20 verbunden.

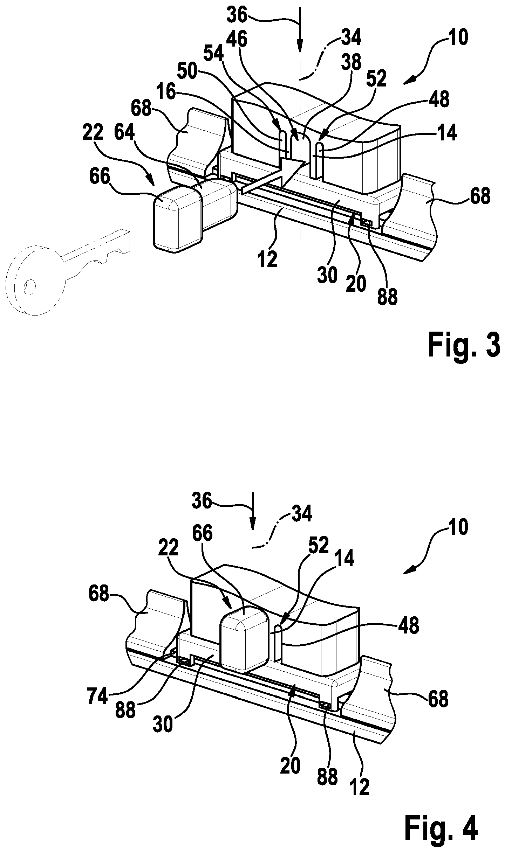

Figur 3 zeigt eine perspektivische Darstellung der Wischvorrichtung nach einem ersten Montageschritt. Die Formschlusselemente 14. 16 des als Wischarmadapter ausgebildeten Adapters 10 werden in das als Ausnehmung ausgebildete Formschlusselement 18 des als Wischblattadapter ausgebildeten Adapters 20 geschoben. Dadurch sind auch die weiteren Formschlusselemente 24, 26 des Adapters 10 in den korrespondierend ausgebildeten Formschlusselementen 60, 62 des weiteren Adapters 20 angeordnet. Der Adapter 10 liegt mit seiner Anlagefläche 44 auf der Auflagefläche 32 des Grundkörpers 30 des Adapters 20 auf. Das Sperrelement 22 ist noch nicht montiert, und somit liegt zwischen den Formschlusselementen 14, 16 des Adapters 10 und dem Formschlusselement 18 des weiteren Adapters 20 keine formschlüssige Verbindung vor.

Figur 4 zeigt die Wischvorrichtung in einem montierten Zustand. Das Sperrelement 22 wird in die Sperrelementaufnahme 46 geschoben, wodurch das Sperrelement 22 die Hakenformen 40, 42 der Formschlusselemente 14, 16 des als Wischarmadapter ausgebildeten Adapters 10 hinter die Hinterschnitte 56, 58 des als Ausnehmung ausgebildeten Formschlusselements 18 des als Wischblattadapter ausgebildeten Adapters 20 ausgelenkt hat. Dadurch ist der Adapter 10 verliersicher mit dem weiteren Adapter 20 verbunden.

Grundsätzlich ist es auch denkbar, dass die Formschlusselemente 14, 16 von dem weiteren, als Wischblattadapter ausgebildeten Adapter 20 ausgebildet werden und das Formschlusselement 18 von dem als Wischarmadapter ausgebildeten Adapter 10. Des Weiteren ist es auch denkbar, dass die als Zapfen ausgebildeten Formschlusselemente 24, 26 von dem als Wischblattadapter ausgebildeten Adapter 20 und die als Ausnehmung ausgebildeten korrespondierenden Formschlusselemente 60, 62 von dem als Wischarmadapter ausgebildeten Adapter 10 ausgebildet werden.

## Patentansprüche

1. Wischvorrichtung mit einem Adapter (10), der eine Anlenkstelle (28) zu einem Wischarm oder einem Wischblatt (12) bildet und zumindest ein Formschlusselement (14, 16) aufweist, das zur formschlüssigen Verbindung mit zumindest einem Formschlusselement (18) eines weiteren Adapters (20) vorgesehen ist, **gekennzeichnet durch** zumindest ein Sperrelement (22), das zur Herstellung der formschlüssigen Verbindung zwischen dem zumindest einen Formschlusselement (14, 16) des Adapters (10) und dem zumindest einen Formschlusselement (18) des weiteren Adapters (20) dazu vorgesehen ist, das zumindest eine Formschlusselement (14, 16) des Adapters (10) auszulenken.

2. Wischvorrichtung nach Anspruch 1, **dadurch gekennzeichnet, dass** der Adapter (10) als ein Wischarmadapter ausgebildet ist.

3. Wischvorrichtung nach Anspruch 1 oder 2, **dadurch gekennzeichnet, dass** das Sperrelement (22) dazu vorgesehen ist, das zumindest eine Formschlusselement (14, 16) des Adapters (10) aus seinem Ursprungszustand auszulenken.

4. Wischvorrichtung nach einem der vorhergehenden Ansprüche, **dadurch gekennzeichnet, dass** das Sperrelement (22) als ein separates Bauteil ausgebildet ist.

5. Wischvorrichtung nach einem der vorhergehenden Ansprüche,
**dadurch gekennzeichnet, dass** das Sperrelement (22) für eine werkzeugfreie Montage vorgesehen ist.

6. Wischvorrichtung nach einem der vorhergehenden Ansprüche,
**dadurch gekennzeichnet, dass** der Adapter (10) zumindest ein weiteres Formschlusselement (24, 26) aufweist, das dazu vorgesehen ist, zumindest einen wesentlichen Teil einer Wischkraft zu übertragen.

7. Wischvorrichtung nach Anspruch 6,
**dadurch gekennzeichnet, dass** das zumindest eine weitere Formschlusselement (24, 26) des Adapters (10) als ein Zapfen ausgebildet ist.

8. Wischvorrichtung nach Anspruch 6 oder 7,
**dadurch gekennzeichnet, dass** das Formschlusselement (24, 26) des Adapters (10) eine ovale Grundform aufweist.

9. System mit einer Wischvorrichtung nach einem der vorhergehenden Ansprüche und dem weiteren Adapter (20).

10. Verfahren zur Montage einer Wischvorrichtung nach einem der vorhergehenden Ansprüche, mit einem Adapter (10), der eine Anlenkstelle (28) zu einem Wischarm oder einem Wischblatt (12) bildet und zumindest ein Formschlusselement (14, 16) aufweist, das zur formschlüssigen Verbindung mit zumindest einem Formschlusselement (18) eines weiteren Adapters (20) vorgesehen ist, wobei mit zumindest einem Sperrelement (22) das zumindest eine Formschlusselement (14, 16) des Adapters (10) ausgelenkt wird.

## Claims

1. Wiper device with an adapter (10) which forms a coupling point (28) to a wiper arm or a wiper blade (12) and has at least one form-fit element (14, 16) which is provided for the form-fitting connection to at least one form-fit element (18) of a further adapter (20), **characterized by** at least one blocking element (22) which, in order to produce the form-fitting connection between the at least one form-fit element (14, 16) of the adapter (10) and the at least one form-fit element (18) of the further adapter (20), is provided in order to deflect the at least one form-fit element (14, 16) of the adapter (10).

2. Wiper device according to Claim 1, **characterized in that** the adapter (10) is in the form of a wiper arm adapter.

3. Wiper device according to Claim 1 or 2, **characterized in that** the blocking element (22) is provided in order to deflect the at least one form-fit element (14, 16) of the adapter (10) out of its original state.

4. Wiper device according to one of the preceding claims, **characterized in that** the blocking element (22) is in the form of a separate component.

5. Wiper device according to one of the preceding claims, **characterized in that** the blocking element (22) is provided for tool-free installation.

6. Wiper device according to one of the preceding claims, **characterized in that** the adapter (10) has at least one further form-fit element (24, 26) which is provided in order to transmit at least a substantial part of a wiping force.

7. Wiper device according to Claim 6, **characterized in that** the at least one further form-fit element (24, 26) of the adapter (10) is in the form of a pin.

8. Wiper device according to Claim 6 or 7, **characterized in that** the form-fit element (24, 26) of the adapter (10) has an oval basic shape.

9. System with a wiper device according to one of the preceding claims and with the further adapter (20).

10. Method for installing a wiper device according to one of the preceding claims, with an adapter (10) which forms a coupling point (28) to a wiper arm or a wiper blade (12) and has at least one form-fit element (14, 16) which is provided for the form-fitting connection to at least one form-fit element (18) of a further adapter (20), wherein the at least one form-fit element (14, 16) of the adapter (10) is deflected with at least one blocking element (22).

## Revendications

1. Dispositif d'essuie-glace comprenant un adaptateur (10) qui forme un point d'articulation (28) avec un bras d'essuie-glace ou un balai d'essuie-glace (12) et qui comporte au moins un élément de liaison par complémentarité de formes (14, 16) qui est destiné à établir une liaison par complémentarité de formes avec au moins un élément de liaison par complémentarité de formes (18) d'un autre adaptateur (20), **caractérisé par** au moins un élément de blocage (22) qui est prévu pour dévier l'au moins un élément de liaison par complémentarité de formes (14, 16) de l'adaptateur (10) afin d'établir la liaison par complémentarité de formes entre l'au moins un élément de liaison par complémentarité de formes (14, 16) de l'adaptateur (10) et l'au moins un élément de liaison par complémentarité de formes (18) de l'autre adaptateur (20).

2. Dispositif d'essuie-glace selon la revendication 1, **caractérisé en ce que** l'adaptateur (10) est conçu comme adaptateur de bras d'essuie-glace.

3. Dispositif d'essuie-glace selon la revendication 1 ou 2, **caractérisé en ce que** l'élément de blocage (22) est prévu pour dévier l'au moins un élément de liaison par complémentarité de formes (14, 16) de l'adaptateur (10) de son état d'origine.

4. Dispositif d'essuie-glace selon l'une des revendications précédentes, **caractérisé en ce que** l'élément de blocage (22) est conçu comme un composant séparé.

5. Dispositif d'essuie-glace selon l'une des revendications précédentes, **caractérisé en ce que** l'élément de blocage (22) est prévu pour un montage sans outil.

6. Dispositif d'essuie-glace selon l'une des revendications précédentes, **caractérisé en ce que** l'adaptateur (10) comporte au moins un autre élément de liaison par complémentarité de formes (24, 26) qui est prévu pour transmettre au moins une partie importante d'une force d'essuyage.

7. Dispositif d'essuie-glace selon la revendication 6, **caractérisé en ce que** l'au moins un autre élément de liaison par complémentarité de formes (24, 26) de l'adaptateur (10) est conçu comme une broche.

8. Dispositif d'essuie-glace selon la revendication 6 ou 7, **caractérisé en ce que** l'élément de liaison par complémentarité de formes (24, 26) de l'adaptateur (10) a une forme de base ovale.

9. Système pourvu d'un dispositif d'essuie-glace selon l'une des revendications précédentes et de l'autre adaptateur (20).

10. Procédé de montage d'un dispositif d'essuie-glace selon l'une des revendications précédentes, comprenant un adaptateur (10) qui forme un point de pivotement (28) par rapport à un bras d'essuie-glace ou un balai d'essuie-glace (12) et qui comporte au moins un élément de liaison par complémentarité de formes (14, 16) qui est prévu pour établir une liaison par complémentarité de formes avec au moins un élément de liaison par complémentarité de formes (18) d'un autre adaptateur (20), l'au moins un élément de liaison par complémentarité de formes (14, 16) de l'adaptateur (10) étant dévié avec au moins un élément de blocage (22).
